# EUROPÄISCHE PATENTSCHRIFT

(11) **EP 1 542 033 B1**
(45) Veröffentlichungstag und Bekanntmachung des Hinweises auf die Patenterteilung: **05.03.2014**
(21) Anmeldenummer: 04025486.4
(22) Anmeldetag: 27.10.2004
(51) Int. Cl.: G01S 7/12, G01S 7/14

(54) **Verfahren zum Anzeigen von Bildern eines Überwachungsraumes**
Method for displaying images of a surveillance space
Procédé d'affichage d'images d'un espace de veille

(30) Priorität: 09.12.2003 CH 20902003
(43) Veröffentlichungstag der Anmeldung: 15.06.2005
(73) Patentinhaber: Rheinmetall Air Defence AG, 8050 Zürich (CH)
(72) Erfinder: Friedli, Andreas, 8640 Marthalen (CH)
(74) Vertreter: Dietrich, Barbara

(56) Entgegenhaltungen:
- US-A- 5 337 057
- US-B1- 6 621 451
- PATENT ABSTRACTS OF JAPAN Bd. 0142, Nr. 49 (P-1053), 28. Mai 1990 (1990-05-28) & JP 02 066483 A (NEC CORP), 6. März 1990 (1990-03-06)

## Beschreibung

Die Erfindung betrifft ein Verfahren zum Anzeigen von Bildern eines Überwachungsraumes nach dem Oberbegriff des Anspruchs 1.

Informationen, die einen Überwachungsraum bzw. wechselnde Zustände in diesem Überwachungsraum betreffen, werden sowohl zu zivilen wie auch zu militärischen Zwecken benötigt. Zivile Zwecken sind insbesondere die Überwachung des Luftraumes allgemein, sowie des Bodenraumes im Umfeld von Flughäfen zuzurechnen. Militärische Zwecke schliessen sowohl Überwachungsfunktionen im Zusammenhang mit der Militärluftfahrt, wie auch im Zusammenhang mit der Bekämpfung feindlicher Flugkörper ein.

In jedem Fall wird der Überwachungsraum durch eine Sensoreinrichtung, die ggfs. mehrere Sensoreinheiten umfassen kann, überwacht. Im Allgemeinen kommen hierfür Radarsensoreinrichtungen zum Einsatz. Jede solche Sensoreinheit rotiert kontinuierlich, so dass sich ihr Blickwinkel laufend ändert. Alle Sensoreinheiten erfassen laufend entsprechend ihrer Zuständigkeit den Überwachungsraum bzw. periodisch wechselnde Sektoren des Überwachungsraumes. Hierbei werden Erfassungsdaten ermittelt und zur Verfügung gestellt, die den Überwachungsraum beschreiben. Die Erfassungsdaten mindestens eines Teils des Überwachungsraumes werden anschliessend zu Anzeigedaten umgesetzt. Schliesslich werden den Anzeigedaten entsprechende Bilder mit Hilfe einer Anzeigeeinrichtung angezeigt, wobei üblicherweise eine im Wesentlichen analoge Anzeige benutzt wird. Vorzugsweise werden die Bilder mittels eines PPI (plan position indicator) angezeigt. Die Bilder werden relativ zum Überwachungsraum in einem vorgebbaren Massstab verkleinert angezeigt.

Dieser Massstab muss so gewählt werden, dass einem Betrachter klare und eindeutige Bilder des Überwachungsraumes mit den darin befindlichen relevanten Objekten gezeigt werden. Die Bilder dürfen daher relativ zum Überwachungsraum nicht beliebig verkleinert werden, das heisst, es muss für die Bilder ein nicht allzu kleiner Massstab gewählt werden. Dies ist sowohl für Überwachungszwecke im Umfeld von Flughäfen wie auch bei der Bekämpfung von bewegten feindlichen Flugkörpern wichtig. Bei der Bekämpfung von bewegten feindlichen Flugkörpern sollten einer Bedienungsperson insbesondere die Bilder eines Effektorenwirkbereiches, das heisst des Wirkungsbereiches einer ortsfesten Feuereinheit, fein aufgelöst dargestellt werden, da das Richten der Feuereinheit und die Entscheidung zur Abgabe von Projektilen und/oder Lenkwaffen auf Grund dieser angezeigten Bilder gefällt werden müssen. Dies hat allerdings zur Folge, dass nur Bilder eines ziemlich eingeschränkten Nahbereiches des Überwachungsraumes, beispielsweise mit einem Radius von etwa 15 km, in feiner Auflösung angezeigt werden können.

Wegen der hohen Geschwindigkeit, die bewegte Körper, insbesondere Flugkörper, erreichen können, und wegen der geringen Entdeckbarkeit derselben, wären auch Vorgänge ausserhalb dieses Nahbereiches des Überwachungsraumes von Interesse, denn bewegte Körper, die sich zu einem bestimmten Zeitpunkt an einer Stelle befinden, deren Bilder nicht in einem Innenbereich der Anzeigeeinrichtung anzeigbar sind, können schon nach einer kurzen Zeitspanne den Nahbereich des Überwachungsraumes erreicht haben, ohne dass sie vorher zur Kenntnis genommen worden sind. Die Anzeigeeinheit sollte also so ausgebildet sein, dass sie einen Gesamtbereich abdeckt, dessen Radius wesentlich grösser ist als der Radius des Nahbereiches des Überwachungsraumes, mindestens etwa 80 km und vorzugsweise mehr. Weil aber eine Abbildung eines so grossen Gesamtbereiches im gleichen Massstab wie die Abbildung des Nahbereiches zur Folge hätte, dass die Abbildung des Nahbereiches nicht mit der erforderlichen Auflösung erfolgen könnte, wurde bisher auf die Anzeige des Fernbereiches auf demselben PPI (plan position indicator) verzichtet.

Aus der US-5,337,057 ist es bekannt, einen Gesamtbereich, das heisst einen Nahbereich und einen Fernbereich, in einem logarithmischen Massstab abzubilden. Damit lässt sich zwar ein grosser Gesamtbereich abbilden, aber weil man auf diese Weise auch vom Nahbereiches nur eine nicht-lineare Abbildung bzw. eine Abbildung mit einem sich mit dem Abstand verändernden Massstab erhält, sind eine problemlose visuelle Beurteilung der Abbildung des Nahbereiches nicht möglich und eine rechnerische Verwertung erschwert.

Es ist nun Aufgabe der Erfindung, ein Verfahren zum Anzeigen von Bildern eines Überwachungsraumes vorzuschlagen, mit welchem sowohl Bilder eines Nahbereiches als auch Bilder eines Fernbereiches des Überwachungsraumes angezeigt werden können, wobei die Anzeige für den Nahbereich in feiner Auflösung mit wählbarem, festem Massstab und die Anzeige für den Fern- bzw. Aussenbereich auf derselben Anzeige (zum Beispiel ein PPI, plan position indicator) angezeigt werden können.

Diese Aufgabe wird erfindungsgemäss bei einem Verfahren der eingangs genannten Art durch die Merkmale des kennzeichnen Teils des Anspruchs 1 gelöst.

Bevorzugte Weiterbildungen und Einzelheiten des erfindungsgemässen Verfahrens werden durch die abhängigen Ansprüche 2 bis 9 umschrieben.

Beim neuen Verfahren erfolgt die Anzeige der Bilder eines Nahbereiches eines Überwachungsraumes bzw. eines Teiles des Überwachungsraumes in herkömmlicher Weise in einem Innenbereich einer Anzeigeeinrichtung in einem konstanten Massstab, wobei die Verkleinerung bzw. der Massstab der Bilder so gewählt wird, dass eine Feinauflösung erfolgt. Die Anzeige der Bilder eines an den Nahbereich angrenzenden Fernbereiches des Überwachungsraumes werden in einem Aussenbereich derselben Anzeigeeinrichtung und in einem Massstab dargestellt, der sich mit zunehmendem Abstand vom Innenbereich progressiv verringert. Die Bilder des Fernbereiches werden also mit stärkerer Verkleinerung angezeigt, je weiter sie vom Nahbereich entfernt sind. Der Massstab, in dem die Bilder des Fernbereiches des Überwachungsraumes angezeigt werden, muss an der gemeinsamen Grenze von Innenbereich und Aussenbereich der Anzeige gleich oder mindestens annähernd gleich sein wie der Massstab, mit dem die Bilder des Nahbereiches des Überwachungsraumes angezeigt werden, damit nicht ein sprunghafter sondern ein gewissermassen nahtloser Anzeige-Übergang realisiert werden kann.

Mit der Erfindung wird erreicht, dass aus dem Innenbereich der Anzeige relativ genaue Informationen über den Nahbereich des Überwachungsraumes erhältlich sind, die verwertbar sind bzw. verwertet werden, beispielsweise zur Betätigung eines Effektors, während aus dem Aussenbereich der Anzeige weniger genaue Informationen über den Fernbereich des Überwachungsraumes erhältlich sind, die nur eine Vorschau auf eventuell demnächst eintretende Zustände im Nahbereich Innenbereich darstellen.

Bevorzugte Ausführungsformen der Erfindung werden im Folgenden an Hand von Beispielen und mit Bezug auf die Zeichnung ausführlich beschrieben. Es zeigen:
- Fig. 1: einen Überwachungsraum mit einer darin angeordneten Sensoreinrichtung, in einem stark vereinfachten Schaubild;
- Fig. 2: das Verfahren nach der Erfindung, in einem Diagramm;
- Fig. 3A: eine Anzeigeeinrichtung in einer ersten Ausführung, in einer vereinfachten Ansicht;
- Fig. 3B: eine Anzeigeeinrichtung in einer zweiten Ausführung, in einer vereinfachten Ansicht;

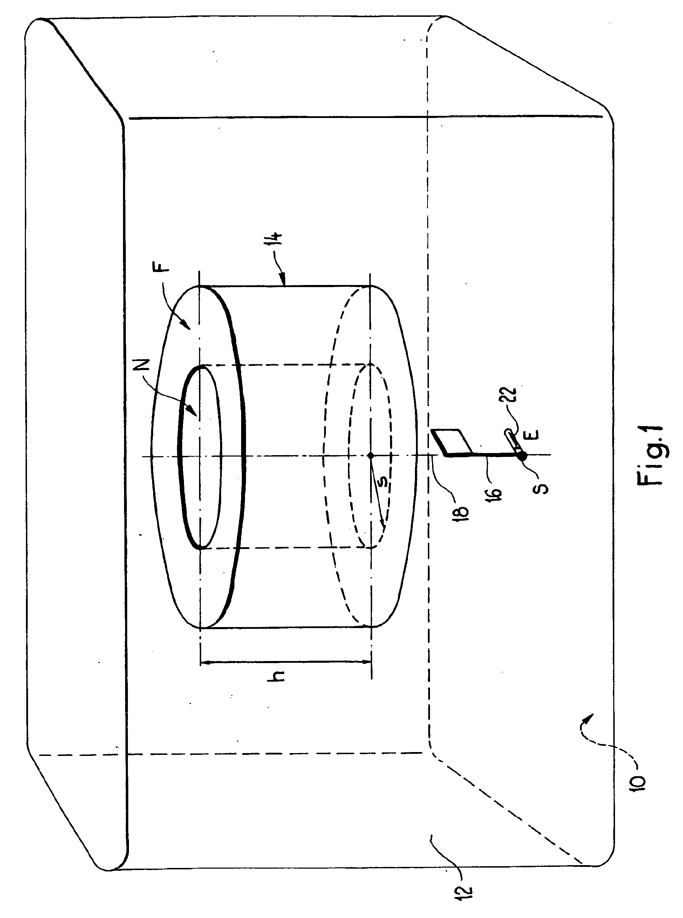

Fig. 1 zeigt ein ebenes, etwa horizontales Gelände 10 und den darüber liegenden Luftraum 12. Ein Teil dieses Luftraumes 12, der bis zum Gelände hinunter reichen kann, bildet einen Überwachungsraum 14, der mit Hilfe einer Sensoreinrichtung 16 überwachbar ist. Die Sensoreinrichtung 16 befindet sich an einem Sensorstandort S. Im vorliegenden Fall ist die Sensoreinrichtung 16 eine Radarsensoreinrichtung. Der Überwachungsraum 14 setzt sich zusammen aus einem Nahbereich N und einem Fernbereich F.

Die Sensoreinrichtung 16 rotiert laufend um eine hier vertikale Sensorachse 18. Hierbei überwacht sie fortlaufend den Überwachungsraum 14 in wechselnden Sektoren, jedoch insgesamt über 360°, in einem Kreis mit einem Radius s um den Sensorstandort S und in einem Höhenbereich h.

Dies gilt natürlich nur dann, wenn kein Hindernis in Form eines Höhenzuges in diesen Überwachungsraum 14 hineinragt. Ist ein solches Hindernis vorhanden, so endet der Überwachungsraum 14 je nach Sensortyp beim Hindernis.

Radarsensoreinrichtungen sind die üblicherweise eingesetzten Sensoreinrichtungen, aber es können auch andere geeignete Sensoreinrichtungen benutzt werden, wesentlich ist nur, dass sie dazu befähigt sind, den erwähnten Überwachungsraum 14 zu überwachen und Erfassungsdaten zur Verfügung zu stellen, die eine hinreichend genaue Anzeige von Bildern des Überwachungsraumes 14 gewährleisten.

Die erwähnte Sensoreinrichtung 16 kann auch mehrere Sensoreinheiten aufweisen, die verschiedene Teile des Überwachungsraumes 14, beispielsweise unterschiedliche Höhen- und/oder Abstandsbereiche, überwachen.

Zwei Sensoreinheiten können entweder am Sensorstandort S angeordnet sein, oder die erste Sensoreinheit kann am Sensorstandort S angeordnet und die zweite Sensoreinheit davon beabstandet sein.

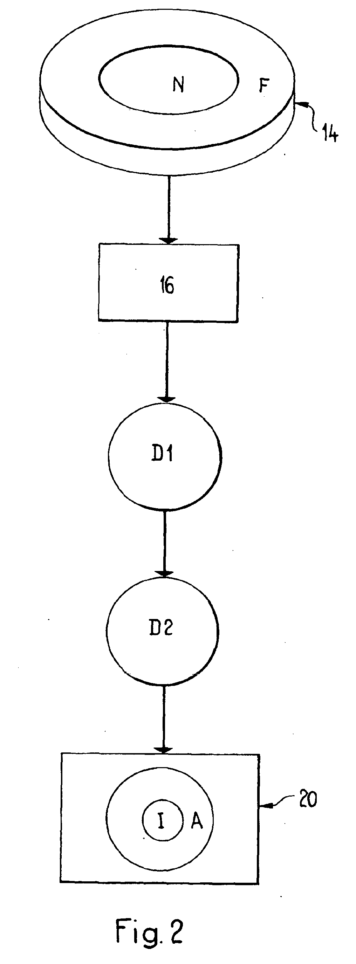

Gemäss Fig. 2 werden auf Grund der Aktivität der Sensoreinrichtung 16 Erfassungsdaten D1 bereitgestellt. Diese Erfassungsdaten D1 werden zu Anzeigedaten D2 umgesetzt. Auf Grund der Anzeigedaten D2 erfolgt das Anzeigen der Bilder 14* des Überwachungsraumes 14 mittels einer Anzeigeeinrichtung 20.

Die Anzeigeeinrichtung 20 kann auch Bilder anzeigen, die auf den Erfassungsdaten von zwei an unterschiedlichen Sensorstandorten angeordneten Sensoreinrichtungen beruhen, jedoch müssen mindestens für die auf den Erfassungsdaten einer der Sensoreinrichtungen beruhenden Bilder 14* entsprechende Koordinatentransformationen vorgenommen werden.

Als Sensoreinrichtung 16 wird, wie schon erwähnt und wie beim vorliegenden Ausführungsbeispiel, vorzugsweise eine Radarsensoreinrichtung eingesetzt, bzw. eine Sensoreinrichtung, die an einem festen Sensorstandort angeordnet ist, und bei welchen das eigentliche Sensorelement fortlaufend rotiert und bei seinen Rotationen Erfassungsdaten des Überwachungsraumes längs 360° erfasst.

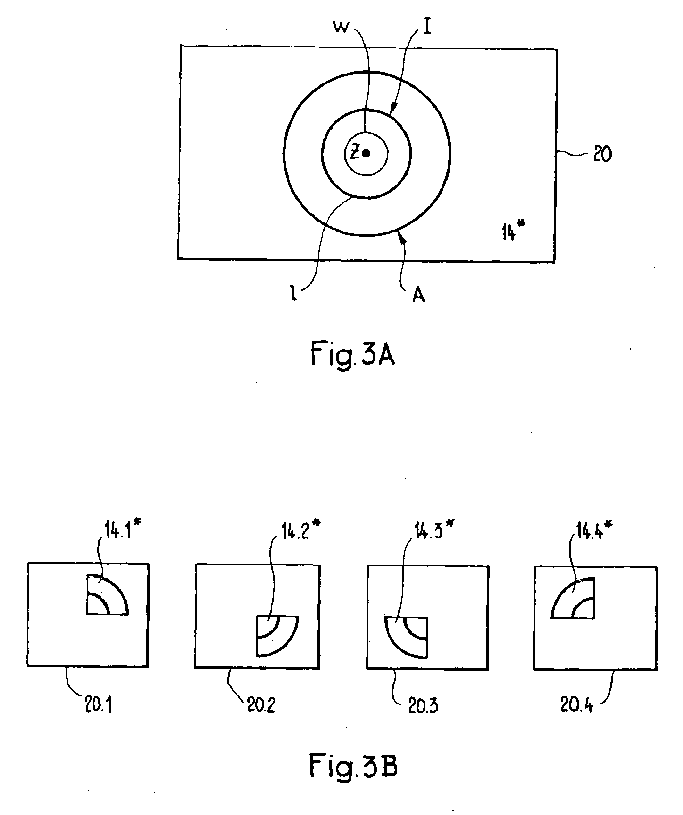

Die Anzeigeeinrichtung 20 kann durch eine einzige Anzeigeeinheit gebildet sein, auf der die Bilder des gesamten Überwachungsraumes 14 angezeigt werden, dass heisst Bilder 14*, die einen gesamten Höhenbereich h und einen Bereich mit dem Radius s über 360° abdecken, wie dies in Fig. 3A dargestellt ist. Es ist aber auch möglich, eine Anzeigeeinrichtung 20 mit mehreren Anzeigeeinheiten 20.1, 20.2, ... einzusetzen. Hierbei dient jede Anzeigeeinheit zum Anzeigen von Bildern 14.1*, 14.2*, ... eines bestimmten Teiles des Überwachungsraumes 14. Werden zum Beispiel, wie in Fig. 3B gezeigt, vier Anzeigeeinheiten 20.1, 20.2, 20.3, 20.4 eingesetzt, so kann jede dieser vier Anzeigeeinheiten 20.1, 20.2, 20.3, 20.4 einen Bereich in Form eines Kreissektors von 90° abdecken. Anstelle oder zusätzlich zu einer solchen sektoriellen Anzeige, können auch durch verschiedene Anzeigeeinheiten Bilder von unterschiedlichen Höhenbereichen des Überwachungsraumes 14 angezeigt werden. Der Einsatz einer Anzeigeeinrichtung 14 mit mehr als einer Anzeigeeinheit ist insbesondere dann sinnvoll, wenn sich die Zustände im Überwachungsraum 14 häufig und/oder schnell ändern, sie bedingt aber praktisch, dass pro Anzeigeeinheit eine Bedienungs-/Beobachtungsperson verfügbar ist.

Die Bilder 14* eines Nahbereiches N des Überwachungsraumes 14 werden in einem Innenbereich I und mit einem für den gesamten Innenbereich I konstanten Massstab M(I) angezeigt. Diese Bilder 14* werden somit alle, relativ zum Überwachungsraum 14, gleichbleibend verkleinert dargestellt. Der hierbei benutzte Massstab M(I) ist vorzugsweise wählbar. In jedem Falle wird dieser Massstab M(I) so gewählt, dass die Anzeige mit einer relativ hohen Auflösung erfolgen kann. Die Information, die von der Anzeigeeinrichtung 20 zur Verfügung gestellt wird, muss so genau sein, dass sie sich verwerten lässt, beispielsweise zum Aktivieren eines Effektors 22, wie dies weiter unten beschrieben wird.

Die Bilder 14* des Nahbereichs N des Überwachungsraumes 14 im Innenbereich I der Anzeigeeinrichtung 20 werden, wie erwähnt, üblicherweise in einem Kreissektor angezeigt und liegen zwischen dem Zentrum Z eines Kreises, aus dem dieser Kreissektor ausgeschnitten ist, und einer Grenzlinie l. Der Winkel, über den sich dieser Kreissektor erstreckt, kann zum Beispiel 90°, sein. Wenn n Anzeigeeinheiten zur Verfügung stehen, kann jede für einen Kreissektor mit einem Winkel von 360°/n zuständig sein. Der Überwachungsraum 14 kann sich aus bestimmten Gründen aber auch über einen Winkel von nur 180° erstrecken, und auch dann erscheinen die Bilder 14* auf der Anzeigeeinrichtung nur in einem Kreissektor, der hierbei 180° beinhaltet. Der Winkel, über den sich der Kreissektor erstreckt, kann auch 360° betragen, wie dies in Fig. 3A dargestellt ist, was bedeutet, dass der Kreissektor zu einem vollen Kreis wird.

Nach der Erfindung werden auch Bilder 14* des Fernbereiches F des Überwachungsraumes 14 angezeigt, und zwar in einem an den Innenbereich I angrenzenden Aussenbereich A der Anzeigeeinrichtung 20, und damit in einem Kreisringsektor. Kreissektor und Kreisringsektor erstrecken sich üblicherweise über denselben Winkelbereich. Wie schon erwähnt, kann dieser Winkelbereich bis zu 360° betragen, womit dann der Kreissektor zu einem vollen Kreis und der Kreisringsektor zu einem vollen Kreisring werden.

Das Anzeigezentrum Z des Kreises und des Kreisringes, aus denen ggfs. der Kreissektor und der Kreisringsektor ausgeschnitten sind, kann dem Bild des Sensorstandortes S entsprechen. Das Anzeigezentrum Z kann aber auch ein Bild eines vom Sensorstandort S beabstandeten Ortes sein, wobei es dann erforderlich ist, die von der Sensoreinrichtung 16 erfassten Daten einer entsprechenden Koordinatentransformation zu unterwerfen.

Die Bilder 14* des Fernbereiches F des Überwachungsraumes 14, die im Aussenbereich A angezeigt werden, sind mit zunehmender Distanz zum Innenbereich I in einem progressiv abnehmenden Massstab M(A) angezeigt. Relativ zum Überwachungsraum 14 sind also diese Bilder 14* um so mehr verkleinert, je weiter sie vom Innenbereich I beabstandet sind. Die Bilder 14* des Aussenbereiches A werden hierbei in einer Auflösung dargestellt, die weniger fein ist als die Auflösung, mit der die Bilder 14* im Innenbereich I dargestellt werden. Es ist nicht primär die Absicht, Information, die durch die Anzeige im Aussenbereich A zur Verfügung gestellt wird, unmittelbar zu verwerten, zum Beispiel zur Aktivierung des Effektors 22. Die Anzeige im Aussenbereich A ist vorwiegend als eine Vorschau oder Vorwarnung für Vorgänge zu betrachten, die sich möglicherweise nach einer kurzen Zeitspanne im Nahbereich N des Überwachungsraumes 14 abspielen und dann im Innenbereich I angezeigt werden.

Der progressiv abnehmende Massstab M(A), in dem erfindungsgemäss die Bilder 14* des Aussenbereiches A angezeigt werden, ist vorzugsweise ein logarithmischer Massstab oder ein Massstab, der einer mathematischen Funktion gleich ist, die näherungsweise logarithmisch ist.

Wie schon beschrieben, haben der Innenbereich I und der Aussenbereich A eine gemeinsame Grenzlinie l, wobei die Innengrenze des Aussenbereiches A mit der Aussengrenze des Innenbereiches I mindestens annähernd zusammenfällt. Die Aussengrenze des Aussenbereiches A liegt innerhalb des Sensorwirkbereiches oder fällt mit der Aussengrenze des Sensorwirkbereiches zusammen.

Der örtliche Massstab M(A), in dem die Bilder 14* in demjenigen Teils des Aussenbereichs A angezeigt werden, der an den Innenbereich I grenzt, muss mindestens annähernd gleich sein wie der Massstab M(I), mit dem die Bilder 14* im Innenbereiches I angezeigt werden, damit ein gewissermassen kontinuierlicher Übergang ermöglicht wird.

Es hat sich als günstig erwiesen, die Erfassungsdaten für den Innenbereich I und für den Aussenbereich A unabhängig voneinander, vorzugsweise parallel bzw. mindestens annähernd zeitgleich zu Anzeigedaten umzusetzen.

Es wurde schon erwähnt, dass die Information, die von der Anzeigeeinrichtung 20 zur Verfügung gestellt wird, zur Aktivierung des Effektors 22, beispielsweise einer Feuereinheit, benutzt werden kann. Ein Effektorstandort E des Effektors 22 kann gemäss Fig. 1 mit dem Sensorzentrum S zusammenfallen und sein Bild kann mit dem Anzeigezentrum Z zusammenfallen. Der Effektorstandort E kann aber auch vom Sensorzentrum S beabstandet sein, was wiederum entsprechende Koordinatentransformationen notwendig machen kann.

In einer Kombination mit dem Effektor 22 kann zum Beispiel die Grenzlinie l zwischen dem Innenbereich I und dem Aussenbereich A der Anzeige mit der Effektorreichweite zusammenfallen, jedenfalls ist es nicht sinnvoll, wenn der Innenbereich I eingeschränkter ist als die Effektorreichweite. Liegt die Effektorreichweite innerhalb des Nahbereiches I, so kann sie durch eine eingeblendete Effektorengrenzlinie w innerhalb des Innenbereiches I angezeigt werden. Für militärische Zwecke, wenn der Effektor 22 eine Feuereinheit ist, ist dies besonders günstig, da eine Bedienungsperson dann auf einen Blick und ohne weitere Überlegung sieht, ob eine Aktivierung, das heisst ein Einsatz, des Effektors 22 bzw. der Feuereinheit wirksam sein kann.

In die Anzeige kann eine Darstellung der Topographie und/oder, vorzugsweise in zeitlich variabler Weise, zum Beispiel signalartig blinkend, und ggfs. stilisiert, eine Darstellung relevanter Bestandteile der Topographie des Umfeldes des Überwachungsraumes 14 eingeblendet werden. Erfolgt eine solche Einblendung auch im Aussenbereich A, so muss dieser entsprechend dem jeweils örtlich gültigen Massstab angezeigt bzw. abgebildet werden. Relevante Bestandteile der Topographie können beispielsweise Landesgrenzen, Höhenzüge, Gewässer oder, bei militärischer Verwendung des neuen Verfahrens, besonders schutzwürdige Objekte wie weitere Standorte von weiteren Feuereinheiten, Kernkraftwerken oder Kulturgütern sein.

In einer typischen Anwendung kann die Effektorreichweite etwa 8 km betragen, der Radius des Nahbereiches N kann etwa 20 km betragen und der Radius des Fernbereiches F etwa 80 km. Diese Zahlenangaben sind aber nur als Beispiele zu verstehen. Massgebend sind jeweils die tatsächliche Reichweite der Sensoreinrichtung 16 und des Effektors 22, jeweils unter Berücksichtigung der lokalen Gegebenheiten, sowie die Art bzw. Qualität der Anzeigeeinrichtung 20 und die Genauigkeit der Umsetzung der Erfassungsdaten D1 in die Anzeigedaten D2.

### Bezugszeichen

- 10: Gelände, Topographie
- 12: Luftraum über 10
- 14: Überwachungsraum
- 14*: angezeigte Bilder von 14
- 16: Sensoreinrichtung
- 18: Sensorachse
- 20: Anzeigeeinrichtung
- 22: Effektor (zB Feuereinheit)

- A: Aussenbereich von 14* (entspr. F)
- E: Effektorstandort
- F: Fernbereich von 14
- I: Innenbereich von 14* (entspr. N)
- N: Nahbereich von 14
- S: Sensorstandort
- Z: Zentrum v. Kreis/Kreissektor bzw. Kreisring/Kreisringsektor der Anzeige

- h: Höhenbereich Sensorreichweite
- l: Grenzlinie zwischen A und I
- s: Radius Sensorreichweite
- w: Effektorengrenzkreis

## Patentansprüche

1. Verfahren zum Anzeigen von Bildern (14*) eines Überwachungsraumes (14), wobei
- laufend der Überwachungsraum (14) mittels einer Sensoreinrichtung (16) erfasst wird,
- Erfassungsdaten (D1), welche den Überwachungsraum (14) beschreiben, zur Verfügung gestellt werden,
- die Überwachungsdaten (D1) mindestens eines Teils des Überwachungsraumes (14) zu Anzeigedaten (D2) umgesetzt werden, und
- die den Anzeigedaten (D2) entsprechenden Bilder (14*) in einem vorgebbaren Massstab durch eine Anzeigeeinrichtung (20), beispielsweise einen PPI (plan position indicator), angezeigt werden,
**dadurch gekennzeichnet,**
- **dass** die Bilder (14*) eines Nahbereiches (N) des Überwachungsraumes (14) in einem konstanten Massstab (M(I)) in einem Innenbereich (I) der Anzeigeeinrichtung (20) angezeigt werden,
- **dass** die Bilder (14*) eines Fernbereiches (F) des Überwachungsraumes (14), der an den Nahbereich (N) angrenzt, in einem Aussenbereich (A) der Anzeigeeinrichtung (20), der mit dem Innenbereich (I) eine gemeinsame Grenzlinie (I) aufweist, in einem mit zunehmendem Abstand vom Innenbereich (I) progressiv abnehmenden Massstab (M(A)) angezeigt werden,
- wobei an der gemeinsamen Grenzlinie (I) der Massstab (M(A)) des Aussenbereiches (A) mindestens annähernd gleich dem Massstab M(I)) des Innenbereiches (I) ist.

2. Verfahren nach Anspruch 1,
**dadurch gekennzeichnet,**
**dass** die Sensoreinrichtung (16) eine Rotationseinrichtung, vorzugsweise eine Radarsensoreinrichtung enthaltend ein oder mehrere Radarsensoreinheiten, ist, die an einem Sensorstandort (S) angeordnet ist und bei wiederholten Rotationen die Erfassungsdaten des Überwachungsraumes (14) über 360° erfasst.

3. Verfahren nach Anspruch 1,
**dadurch gekennzeichnet**
**dass** die Bilder des Nahbereiches (N) des Überwachungsraumes (14) in einem Kreissektor und die Bilder des Fernbereiches (F) des Überwachungsraumes (14) in einem an den Kreissektor angrenzenden konzentrischen Kreisringsektor angezeigt werden, wobei sich der Kreisring und der Kreisringsektor über denselben Winkelbereich von bis zu 360° erstrecken.

4. Verfahren nach den Ansprüchen 2 und 3,
**dadurch gekennzeichnet,**
**dass** das Zentrum (Z) des Kreises und des Kreissektors dem Zentrum des Überwachungsraumes entspricht.

5. Verfahren nach Anspruch 1,
**dadurch gekennzeichnet,**
**dass** der progressiv abnehmende Massstab (M(A)), in dem die Bilder (14*) im Aussenbereich (A) angezeigt werden, ein logarithmischer Massstab ist.

6. Verfahren nach Anspruch 1,
**dadurch gekennzeichnet,**
**dass** die Erfassungsdaten (D1) für die im Innenbereich (I) und im Aussenbereich (A) angezeigten Bilder (14*) unabhängig voneinander, vorzugsweise parallel, zu Anzeigedaten (D2) umgesetzt werden.

7. Verfahren nach Anspruch 1,
**dadurch gekennzeichnet,**
**dass** aus dem Innenbereich (I) gewinnbare Information zur Verwertung bestimmt ist und aus dem Aussenbereich (A) gewinnbare Information als Vorschau oder Vorwarnung bestimmt ist.

8. Verfahren nach Anspruch 1,
**dadurch gekennzeichnet,**
**dass** in die Anzeige der Bilder (14*) eine Darstellung der Topographie und/oder, vorzugsweise in zeitlich variabler Weise und ggfs. stilisiert, relevanter Bestandteile der Topographie des Umfeldes des Überwachungsraumes (14) eingeblendet werden.

9. Verfahren nach Anspruch 1,
**dadurch gekennzeichnet,**
**dass** das Zentrum (Z) des Kreises und des Kreissektors einem Effektorstandort (E) eines Effektors (22), insbesondere einem Feuereinheitsstandort, mit einer bestimmten Reichweite entspricht, und dass vorzugsweise ein der Reichweite entsprechender, zum Kreis des Innenbereiches (I) und zum Kreissektor des Aussenbereiches (A) konzentrischer Effektorengrenzkreis (w) in die Anzeige eingeblendet wird, wobei der Radius des Effektorengrenzkreises (w) vorzugsweise kleiner ist als der Radius des Kreises des Innenbereiches (I).

10. Verfahren nach Anspruch 1,
**dadurch gekennzeichnet,**
**dass** ein Entfernungsbereich in einem progressiv abnehmenden Massstab dargestellt wird.

## Claims

1. Method for displaying images (14*) of a surveillance space (14), wherein
- the surveillance space (14) is continuously recorded by means of a sensor device (16),
detected data (D1) that describe the surveillance space (14) are made available,
- the detected data (D1) of at least part of the surveillance space (14) are converted into display data (D2),
and
- the images (14*) corresponding to the display data (D2) are displayed to a specifiable scale by a display device (20), e.g. a PPI (plan position indicator),
**characterized in that**
- the images (14*) of a near area (N) of the surveillance space (14) are displayed to a constant scale (M(I)) in an inner area (I) of the display device (20).
- the images (14*) of a far area (F) of the surveillance space (14), which is adjacent to the near area (N), are displayed in an outer area (A) of the display device (20), which has a common boundary line (1) with the inner area (I), to a scale (M(A)) that progressively reduces with increasing distance from the inner area (I),
- wherein on the common boundary line (1) the scale (M(A)) of the outer area (A) is at least approximately equal to the scale (M(I)) of the inner area (I).

2. Method according to Claim 1,
**characterized in that**
the sensor device (16) is a rotating device, preferably a radar sensor device containing one or a plurality of radar sensor units, which is disposed at a sensor location (S) and records the detected data of the surveillance space (14) over 360° for repeated rotations.

3. Method according to Claim 1,
**characterized in that**
the images of the near area (N) of the surveillance space (14) are displayed in a sector of a circle and the images of the far area (F) of the surveillance space (14) are displayed in a concentric annular sector of a circle bounding on the circle sector, wherein the annular ring and the annular sector extend over the same angular range of up to 360°.

4. Method according to Claims 2 and 3,
**characterized in that**
the centre (Z) of the circle and of the circle sector correspond to the centre of the surveillance space.

5. Method according to Claim 1,
**characterized in that**
the progressively decreasing scale (M(A)) to which the images (14*) in the outer area (A) are displayed is a logarithmic scale.

6. Method according to Claim 1,
**characterized in that**
the detected data (D1) for the images (14*) displayed in the inner area (I) and in the outer area (A) are converted into display data (D2) independently of each other, preferably in parallel.

7. Method according to Claim 1,
**characterized in that**
information obtainable from the inner area (I) is designated for utilization and information obtainable from the outer area (A) is designated for briefing or warning.

8. Method according to Claim 1,
**characterized in that**
a representation of the topography and/or relevant components of the topography of the surroundings of the surveillance space (14), preferably in a chronologically variable manner and possibly stylized, can be merged into the display of the images (14*).

9. Method according to Claim 1,
**characterized in that**
the centre (Z) of the circle and of the circle sector corresponds to an effector location (E) of an effector (22), especially a fire unit location, with a defined range, and that preferably an effector boundary circle (w) corresponding to the range, concentric to the circle of the inner area (I) and concentric to the circle sector of the outer area (A) is merged into the display, wherein the radius of the effector boundary circle (w) is preferably smaller than the radius of the circle of the inner area (I).

10. Method according to Claim 1,
**characterized in that**
a distance range is illustrated to a progressively decreasing scale.

## Revendications

1. Procédé d'affichage d'images (14*) d'un espace de surveillance (14), dans lequel
- l'espace de surveillance (14) est détecté en continu au moyen d'un dispositif à capteurs (16),
- des données de détection (D1) qui décrivent l'espace de surveillance (14) sont fournies,
- les données de détection (D1) d'au moins une partie de l'espace de surveillance (14) sont converties en données d'affichage (D2),
et
- les images (14*) correspondant aux données d'affichage (D2) sont affichées à une échelle prédéterminée par un dispositif d'affichage (20) tel qu'un PPI (Plan Position Indicator),
**caractérisé en ce que**
- les images (14*) d'une région proche (N) de l'espace de surveillance (14) sont affichées à une échelle constante (M(I)) dans une région intérieure (I) du dispositif d'affichage (20),
- les images (14*) d'une région distante (F) de l'espace de surveillance (14) qui délimite la région proche (N) sont affichées dans une région extérieure (A) du dispositif d'affichage (20) qui comprend une ligne frontière (1) commune avec la région intérieure (I), à une échelle (M(A)) diminuant progressivement lorsque la distance à la région intérieure (I) croît,
- dans lequel l'échelle (M(A)) de la région extérieure (A) est au moins approximativement identique à l'échelle M((I)) de la région intérieure (I) sur la ligne frontière (1) commune.

2. Procédé selon la revendication 1, **caractérisé en ce que** le dispositif à capteurs (16) est un dispositif de rotation, de préférence un dispositif à capteurs radar comportant une ou plusieurs unités à capteurs radar, qui est disposé à un emplacement de capteur (S) et qui détecte les données de détection de l'espace de surveillance (14) par des rotations répétées de 360°.

3. Procédé selon la revendication 1, **caractérisé en ce que** les images de la région proche (N) de l'espace de surveillance (14) sont affichées dans un secteur circulaire et les images de la région distante (F) de l'espace de surveillance (14) sont affichées dans un secteur circulaire concentrique adjacent au secteur circulaire, dans lequel l'anneau circulaire et le secteur d'anneau circulaire couvrent une étendue angulaire allant jusqu'à 360°.

4. Procédé selon les revendications 2 et 3, **caractérisé en ce que** le centre (Z) du cercle et du secteur circulaire correspond au centre de l'espace de surveillance.

5. Procédé selon la revendication 1, **caractérisé en ce que** l'échelle (M(A)) diminuant progressivement à laquelle les images (14*) sont affichées dans la région extérieure (A) est une échelle logarithmique.

6. Procédé selon la revendication 1, **caractérisé en ce que** les données de détection (D1) destinées aux images (14*) affichées dans la région intérieure (I) et dans la région extérieure (A) sont converties en données d'affichage (D2) indépendamment les unes des autres, de préférence en parallèle les unes avec les autres.

7. Procédé selon la revendication 1, **caractérisé en ce qu'**une information pouvant être déduite de la région intérieure (I) est déterminée à des fins d'exploitation et **en ce qu'**une information pouvant être déduite de la région extérieure (A) est déterminée en tant qu'aperçu ou qu'avertissement.

8. Procédé selon la revendication 1, **caractérisé en ce qu'**une représentation de la topographie est insérée, et/ou des composantes pertinentes de la topographie de l'environnement de l'espace de surveillance (14) sont insérées, de préférence de manière variable dans le temps et éventuellement stylisée, dans l'affichage des images (14*).

9. Procédé selon la revendication 1, **caractérisé en ce que** le centre (Z) du cercle et du secteur circulaire correspond à un emplacement d'effecteur (E) d'un effecteur (22), notamment à un emplacement d'une unité de mise à feu ayant une portée déterminée, et **en ce qu'**un cercle limite d'effecteur (w) correspondant à la portée déterminée et concentrique par rapport au cercle de la région intérieure (I) et au secteur circulaire de la région extérieure (A) est de préférence inséré dans l'affichage, le rayon du cercle limite d'effecteur (w) étant de préférence inférieur au rayon du cercle de la région intérieure (I).

10. Procédé selon la revendication 1, **caractérisé en ce qu'**une plage de distances est représentée avec une échelle diminuant progressivement.
